# EUROPÄISCHE PATENTSCHRIFT

(11) **EP 0 672 859 B1**
(45) Veröffentlichungstag und Bekanntmachung des Hinweises auf die Patenterteilung: **04.08.1999**
(21) Anmeldenummer: 95103023.8
(22) Anmeldetag: 03.03.1995
(51) Int. Cl.: F17C 13/00, G09F 3/02, G06K 19/04

(54) **Vorrichtung für die Aufnahme elektronischer Datenträger für Gasflaschen**
Device for holding electronic data carriers on gas cylinders
Dispositif de logement pour support de données électronique sur des bouteilles à gaz

(30) Priorität: 18.03.1994 DE 4409313
(43) Veröffentlichungstag der Anmeldung: 20.09.1995
(73) Patentinhaber: MESSER GRIESHEIM GMBH, 60547 Frankfurt (DE)
(72) Erfinder: Ahrweiler, Jürgen, D-47839 Krefeld (DE); Christen, Joachim, D-47198 Duisburg (DE); Tophofen, Karl-Heinz, D-47839 Krefeld (DE); Wronski, Hans-Jürgen, D-47495 Rheinberg (DE)

(56) Entgegenhaltungen:
- WO-A-91/03027
- WO-A-93/13494
- FR-A- 1 512 526
- GB-A- 2 077 555

## Beschreibung

Die Erfindung betrifft eine Vorrichtung für die Aufnahme elektronischer Datenträger für Gasflaschen nach dem Oberbegriff des Anspruches 1.

FR-A-1 512 526 beschreibt einen ringförmigen Plastikträger mit Magnetstreifen zur Identifikation von Flaschen für Flüssiggas, wobei der Plastikträger am Flaschenhals befestigt wird.

Systeme mit elektronischem Datenträger zur maschinenlesbaren Identifikation des Inhaltes, beispielsweise von Fahrzeugen, werden in US 5 008 661 und US 4 364 043 beschrieben. Es besteht ein zunehmendes Bedürfnis, derartige Systeme auch zur maschinenlesbaren Identifikation von Gasflaschen, insbesondere wenn sie sich auf Paletten befinden, einzusetzen. Hierzu sind jedoch einige für Gasflaschen spezifische Bedingungen einzuhalten. So muß sich der elektronische Datenträger für ein Flaschenidentifikationssystem ohne großen Aufwand an der Flasche befestigen lassen. Die Vorrichtung zur Aufnahme des Datenträgers muß so gestaltet sein, daß sie sich nur durch Zerstörung oder allenfalls mittels eines Spezialwerkzeuges wieder von der Flasche entfernen läßt. Dies gilt auch für die Befestigung des Datenträgers an der Vorrichtung. Der Datenträger muß so an der Flasche angebracht werden, daß die Daten auch bei aufgesetzter Flaschenkappe lesbar sind. Die Handhabung der Gasflaschen und die Betriebsabläufe bei der Gasflaschenreinigung dürfen nicht beeinträchtigt werden.

Die derzeitig angebotenen Systeme zur maschinenlesbaren Identifikation von Gasflaschen erfüllen diese Bedingungen nicht. So soll beispielsweise der Datenträger in Form einer Knopfzellenbatterie in eine Sackloch-Bohrung des Flaschenhalsringes eingesetzt werden. Hierzu muß der bestehende Flaschenpark manuell, d.h. kostenintensiv, angebohrt werden. Außerdem verringert sich die Leseentfernung extrem, da der Datenträger von Metall umgeben ist. Palettierte Gasflaschen können deshalb nicht mehr mit vertretbarem Aufwand erfaßt werden.

Ein anderer Vorschlag sieht das Aufkleben des knopfförmigen Datenträgers auf die Flaschenschulter vor. Hier besteht die Gefahr, daß der Datenträger während der üblichen Flaschenaußenreinigung durch Stahlkies-Strahlen verloren geht. Außerdem kann die Flaschenhandhabung beeinträchtigt werden, z.B. beim Rollen der Gasflaschen bei manuellem Transport von Einzelflaschen. Für Datenträger mit Ringantenne wird ein Kunststoffring angeboten, der um den Flaschenhals gelegt und dort festgeklebt wird. Da die Durchmesser des Flaschenhalses nicht einheitlich sind, müssen Kunststoffringe unterschiedlichen Durchmessers bereitgehalten werden. Die Anbringung solcher Ringe ist aufwendig, da der Flaschenhalsdurchmesser jeder Flasche gemessen werden muß.

Der Erfindung liegt daher die Aufgabe zugrunde, eine Vorrichtung für die Aufnahme elektronischer Datenträger zur maschinenlesbaren Identifikation von Gasflaschen zu schaffen, welche leicht, aber dauerhaft auf allen Gasflaschen angebracht werden kann, eine optimale Leseentfernung garantiert und bei palettierten Flaschen ohne nennenswerten Aufwand in eine günstige Position für den Informationsaustausch gebracht werden kann.

Ausgehend von dem im Oberbegriff des Anspruches 1 berücksichtigten Stand der Technik ist diese Aufgabe erfindungsgemäß gelöst mit den im kennzeichnenden Teil des Anspruches 1 angegebenen Merkmalen.

Vorteilhafte Weiterbildungen der Erfindung sind in den Unteransprüchen angegeben.

Die erfindungsgemäße Anordnung eines Kunststoffringes zur Aufnahme des Datenträgers in der Hinterdrehung unterhalb des Flaschenkappengewindes hat zunächst den Vorteil, daß nur ein einziger Typ Befestigungsringe bevorratet werden muß, denn das Flaschenkappengewinde mit der zugehörigen Hinterdrehung sind bei allen Gasflaschen im Gegensatz zum Durchmesser des Flaschenhalses einheitlich. Je nach Größe des Innendurchmessers des Ringes liegt dieser fest an der Hinterdrehung an oder ist leicht drehbar. Der Innendurchmesser des Kunststoffringes ist jedoch immer kleiner als der Außendurchmesser des Flaschenkappengewindes. Der Kunststoffring kann somit nicht verloren gehen und auch nur durch Zerstörung von der Gasflasche wieder entfernt werden. Zwei bevorzugte Ausführungsformen ermöglichen eine schnelle und unkomplizierte Montage des Kunststoffringes. Wenn der Ring geschlossen ist, kann er mittels eines kegelförmigen Werkzeuges über das Flaschenkappengewinde gezogen werden. Hierzu muß der Kunststoffring aus begrenzt flexiblen Material bestehen. Wenn der Kunststoffring einseitig offen ist, kann er mittels einer Klipsung geschlossen werden, welche nur durch mechanische Zerstörung geöffnet werden kann. Bei dieser Ausführungsform kann der Kunststoffring aus Material hoher Formstabilität bestehen. Die Klipsung kann auch so ausgelegt werden, daß sie nur mittels eines Spezialwerkzeuges zerstörungsfrei geöffnet werden kann.

Zwei Ausführungsbeispiele der Erfindung sollen anhand der beigefügten Zeichnungen erläutert werden.

Es zeigen:
- Fig. 1: das Oberteil einer Gasflasche mit Kunststoffring und abgewinkelter Lasche zur Aufnahme des Datenträgers,
- Fig. 2: den Kunststoffring mit Lasche,
- Fig. 3: das Oberteil einer Gasflasche mit über das Flaschenkappengewinde gestülptem kegelförmigen Werkzeug zur Montage des Kunststoffringes,
- Fig. 4: einen Kunststoffring, welcher durch Klipsung verschließbar ist,
- Fig. 5: einen Schnitt A-A durch den Kunststoffring nach Fig. 4.

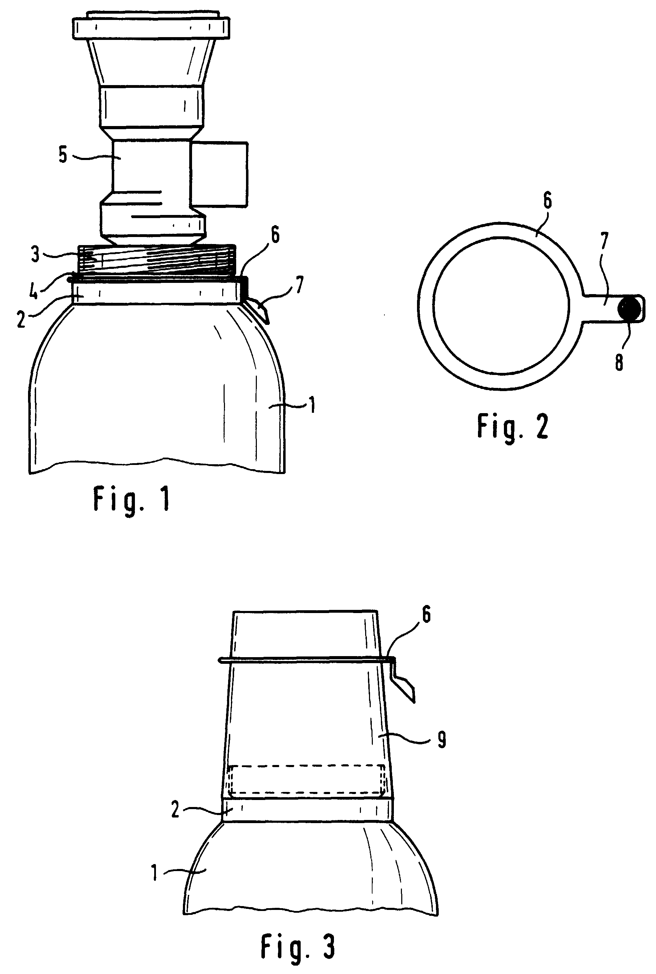

Fig. 1 zeigt eine übliche Gasflasche 1 mit Flaschenhalsring 2, Flaschenkappengewinde 3 mit Hinterdrehung 4 und aufgesetztem Flaschenventil 5. Erfindungsgemäß ist in der Hinterdrehung 4 ein Kunststoffring 6 aus begrenzt flexiblen Material angeordnet. Der Kunststoffring 6 besitzt eine Lasche 7, welche so abgewinkelt ist, daß sie am Flaschenhalsring und an der Flaschenschulter anliegt. Fig. 2 zeigt eine Draufsicht auf den Kunststoffring 6 mit gestreckt dargestellter Lasche 7 und eingegossenem Datenträger 8. Fig. 3 zeigt die Gasflasche 1 mit einem kegelförmigen Werkzeug 9, welches über das Flaschenkappengewinde gestülpt ist. Mit Hilfe des kegelförmigen Werkzeuges 9 kann der Kunststoffring 6 einfach und schnell über das Flaschenkappengewinde gezogen werden. Bevorzugt wird der Innendurchmesser des Kunststoffringes 6 so bemessen, daß der Kunststoffring 6 an der Hinterdrehung fest anliegt, aber noch drehbar ist. Die in den Fig. 1 bis 3 dargestellte Variante der Erfindung ist insbesondere auch für solche Datenträger geeignet, die mit einer ringförmigen Übertragungsantenne versehen sind. Diese befindet sich dann in Bereich des Außendurchmessers des Kunststoffringes 6, welcher gegebenenfalls vergrößert und bis auf die Flaschenschulter heruntergezogen werden kann. Die Lasche 7 kann hierbei entfallen.

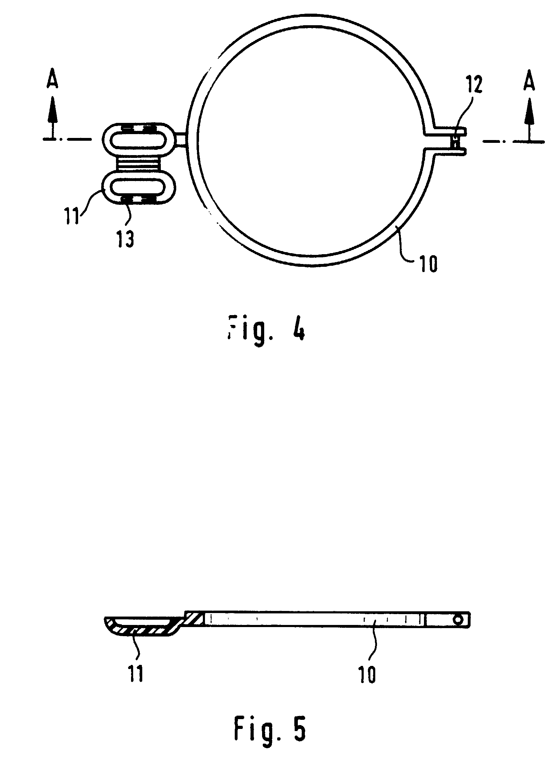

In den Fig. 4 und 5 ist ein Kunststoffring 10 dargestellt, welcher eine hohe Formstabilität besitzt. Der Kunststoffring 10 ist einseitig offen und wird mittels einer Klipsung 12 endlos geschlossen. Er besitzt ebenfalls eine abgewickelte Lasche 11, die auch mittels einer Klipsung 13 geschlossen werden kann. Dies macht es möglich, die Datenträger in der Lasche 11 gegebenenfalls auszutauschen. Fig. 5 zeigt, daß die Lasche 11 aus zwei Schalen gebildet wird, welche nach dem Klipsen einen Hohlraum zur Aufnahme des Datenträgers bilden.

Alle Klipsungen können nur durch mechanische Zerstörung geöffnet werden. Falls gewünscht, können die Klipsungen aber auch so ausgelegt werden, daß sie mittels eines Spezialwerkzeuges zerstörungsfrei geöffnet werden können. Zur Montage des Kunststoffringes 10 werden keine zusätzlichen Werkzeuge benötigt. Auch bei dieser Ausführungsform ist nach gewaltsamer Entfernung keine Wiederverwendung möglich und ein Mißbrauch somit sofort erkennbar. Der Kunststoffring 10 kann fest fixiert oder drehbar gestaltet werden. Der Datenträger in der Lasche kann nach gewaltsamer Öffnung entnommen werden, um ihn entweder wieder zu verwenden, wenn nur der Kunststoffring 10 verschlissen ist, oder um ihn zu recyceln.

Bei der Außenreinigung der Flaschen durch Stahlkies-Strahlen können die erfindungsgemäßen Kunststoffringe an der Flasche verbleiben. Da sie die Flaschenschulter nicht verdecken, bleiben die auf der Flaschenschulter hart geprägten Informationen lesbar.

## Patentansprüche

1. Gasflasche (1) mit einer Vorrichtung für die Aufnahme eines Datenträgers zur maschinenlesbaren Identifikation der Gasflasche (1), wobei die Vorrichtung einen Kunststoffring (6,10) umfaßt, der in einer Hinterdrehung (4) unterhalb des Flaschenkappengewindes (3) der Gasflasche (1) angeordnet ist, dadurch gekennzeichnet, daß der Datenträger als elektronischer Datenträger ausgeführt ist und in einer Lasche (7, 11) aufgenommen ist.

2. Gasflasche nach Anspruch 1,
dadurch gekennzeichnet,
daß der Kunststoffring (6) aus begrenzt flexiblem Material besteht und einen Innendurchmesser besitzt, der gleich oder wenig größer als der Durchmesser der Hinterdrehung ist.

3. Gasflasche nach Anspruch 1,
dadurch gekennzeichnet,
daß der Kunststoffring (10) aus Material hoher Formstabilität besteht, offen ist und mittels einer Klipsung (12) verschließbar ist.

4. Gasflasche nach Anspruch 3,
dadurch gekennzeichnet,
daß die Klipsung (12) nicht zerstörungsfrei lösbar ist.

5. Gasflasche nach einem der Ansprüche 1 bis 4,
dadurch gekennzeichnet,
daß der Datenträger in die Lasche eingegossen ist.

6. Gasflasche nach einem der Ansprüche 1 bis 4,
dadurch gekennzeichnet,
daß die Lasche aus zwei durch Klipsung miteinander verschließbaren Halbschalen besteht.
daß die Lasche aus zwei durch Klipsung miteinander verschließbaren Halbschalen besteht.

## Claims

1. Gas cylinder (1) with a device for holding a data carrier for the machine-readable identification of the gas cylinder (1), the device comprising a plastic ring (6, 10) arranged in an undercut (4) underneath the cylinder cap thread (3) of the gas cylinder (1), characterized in that the data carrier is designed as an electronic data carrier and is held in a lug (7, 11).

2. Gas cylinder according to Claim 1,
characterized
in that the plastic ring (6) is composed of material having limited flexibility and has an internal diameter which is equal to or slightly greater than the diameter of the undercut.

3. Gas cylinder according to Claim 1,
characterized
in that the plastic ring (10) is composed of material having high dimensional stability, is open and can be closed by means of a clip (12).

4. Gas cylinder according to Claim 3,
characterized
in that the clip (12) cannot be released nondestructively.

5. Gas cylinder according to one of Claims 1 to 4,
characterized
in that the data carrier is cast into the lug.

6. Gas cylinder according to one of Claims 1 to 4,
characterized
in that the lug consists of two half-shells which can be closed by being clipped together.
in that the lug consists of two half-shells which can be closed by being clipped together. [sic]

## Revendications

1. Bouteille à gaz (1) équipé d'un dispositif destiné à recevoir un support de données afin d'effectuer une identification pouvant être lue par machine de la bouteille à gaz (1), le dispositif comprenant un anneau en matière plastique (6, 10) disposé dans une saignée dégagée au tour (4) au-dessous du filetage de capuchon de bouteille (3) de la bouteille à gaz (1),
caractérisée en ce que
le support de données est réalisé sous la forme de support de données électronique et est logé dans une patte (7, 11).

2. Bouteille à gaz (1) selon la revendication 1,
caractérisée en ce que
l'anneau en matière plastique (6) est constitué d'un matériau à flexibilité limitée et a un diamètre intérieur égal ou un peu supérieur au diamètre de la saignée dégagée au tour.

3. Bouteille à gaz selon la revendication 1,
caractérisée en ce que
l'anneau en matière en plastique (10) est réalisé en un matériau à haute stabilité de forme, est ouvert et peut être fermé au moyen d'un enclipsage (12).

4. Bouteille à gaz selon la revendication 3,
caractérisée en ce que
l'encliquetage (12) n'est pas désolidarisable sans destruction.

5. Bouteille à gaz selon l'une des revendications 1 à 4,
caractérisée en ce que
le support de données est moulé dans la patte au moment de la coulée ou du moulage.

6. Bouteille à gaz selon l'une des revendications 1 à 4,
caractérisée en ce que
la patte est constituée de deux demi-coques pouvant être fermées ensemble par enclipsage.
